(19)

Europäisches
Patentamt

European
Patent Office

Office européen
des brevets

(11)     **EP 2 424 182 A1**

(12)                        **EUROPEAN PATENT APPLICATION**

(43) Date of publication:
     **29.02.2012  Bulletin 2012/09**

(51) Int Cl.:
     **H04L 27/26** *(2006.01)*

(21) Application number: **10174546.1**

(22) Date of filing: **30.08.2010**

(84) Designated Contracting States:
     **AL AT BE BG CH CY CZ DE DK EE ES FI FR GB
     GR HR HU IE IS IT LI LT LU LV MC MK MT NL NO
     PL PT RO SE SI SK SM TR**
     Designated Extension States:
     **BA ME RS**

(71) Applicants:
     • **Mitsubishi Electric R&D Centre Europe B.V.
       1119 NS  Schiphol Rijk (NL)**
       Designated Contracting States:
       **FR**
     • **Mitsubishi Electric Corporation
       Chiyoda-ku
       Tokyo 100-8310 (JP)**
       Designated Contracting States:
       **AL AT BE BG CH CY CZ DE DK EE ES FI GB GR
       HR HU IE IS IT LI LT LU LV MC MK MT NL NO PL
       PT RO SE SI SK SM TR**

(72) Inventor: **Castelain, Damien
     35802, Rennes Cedex (FR)**

(74) Representative: **Maillet, Alain et al
     Cabinet Le Guen Maillet
     5, place Newquay
     B.P. 70250
     35802 Dinard Cedex (FR)**

(54)     **PAPR improvement in SC-FDMA by extending bandwidth and spectral shaping**

(57)     The present invention concerns a method for improving the peak to average power ratio structure of SC-OFDM modulation scheme. The method :
- spreads data from the time domain to the frequency domain,
- maps at least a part of the spread data on a predetermined number of first subcarriers and maps a part of the spread data which are mapped on the predetermined number of first subcarriers on second subcarriers, each second subcarrier being spaced from the first subcarrier on which the same data as the one mapped on the second subcarrier is mapped by the predetermined number of first subcarriers,
- reduces the amplitude of at least a part of the subcarriers on which at least the spread data are mapped,
- executes an OFDM on at least the mapped spread data on the first and second subcarriers in order to form a SC-OFDM modulated symbol,
- transfers the SC-OFDM modulated symbol.

Fig. 5

EP 2 424 182 A1

**Description**

The present invention relates generally to a method and a device for improving the peak to average power ratio structure of single carrier orthogonal frequency division multiplex modulation scheme.

Single carrier orthogonal frequency division multiplex modulation scheme is a modulation scheme with orthogonal frequency division multiplex type multiplexing but single-carrier-like envelope. It can be implemented either in the time-domain or in the frequency-domain and is also called discrete Fourier transform spread orthogonal frequency division multiplex.

The main advantage with respect to orthogonal frequency division multiplex is that the discrete Fourier transform pre-coding restores the single carrier nature of the signal, i.e. a low peak to average power ratio (PAPR).

A low PAPR allows a better use of the transmission power amplifier, and reduces the power consumption.

Furthermore, low PAPR avoids that the peak values of some of the transmitted signals could be much larger than the typical values. This could lead to a necessity of using circuits with linear characteristics within a large dynamic range, otherwise the signal clipping at high levels would yield a distortion of the transmitted signal and out-of-band radiation.

The present invention aims at providing a method and a device which improve the peak to average power ratio structure of single carrier orthogonal frequency division multiplex modulation scheme in order to reduce the electric power consumption of a source transferring single carrier orthogonal frequency division multiplex modulated symbols.

To that end, the present invention concerns a method for improving the peak to average power ratio structure of single carrier orthogonal frequency division multiplex modulation scheme, characterised in that the method comprises the steps, executed by a source transferring signal, of:

- spreading data from the time domain to the frequency domain,
- mapping at least a part of the spread data on a predetermined number of first subcarriers and mapping a part of the spread data which are mapped on the predetermined number of first subcarriers on second subcarriers, the number of second subcarriers being lower than the number of first subcarriers, the subcarriers being consecutive, each second subcarrier being spaced from the first subcarrier on which the same data as the one mapped on the second subcarrier is mapped by the predetermined number of first subcarriers,
- reducing the amplitude of at least a part of the subcarriers on which at least the spread data are mapped,

- executing an orthogonal frequency division multiplex modulation on at least the mapped spread data on the first and second subcarriers in order to form a single carrier orthogonal frequency division multiplex modulated symbol,
- transferring the single carrier orthogonal frequency division multiplex modulated symbol.

The present invention also concerns a device for improving the peak to average power ratio structure of single carrier orthogonal frequency division multiplex modulation scheme, characterised in that the device is included in a source transferring signal and comprises :

- means for spreading data from the time domain to the frequency domain,
- means for mapping at least a part of the spread data on a predetermined number of first subcarriers and for mapping a part of the spread data which are mapped on the predetermined number of first subcarriers on second subcarriers, the number of second subcarriers being lower than the number of first subcarriers, the subcarriers being consecutive, each second subcarrier being spaced from the first subcarrier on which the same data as the one mapped on the second subcarrier is mapped by the predetermined number of first subcarriers,

- means for reducing the amplitude of at least a part of the subcarriers on which at least the spread data are mapped,
- means for executing an orthogonal frequency division multiplex modulation on at least the mapped spread data on the first and second subcarriers in order to form a single carrier orthogonal frequency division multiplex modulated symbol,
- transferring the single carrier orthogonal frequency division multiplex modulated symbol.

Thus, the power consumption of the source is reduced.

Furthermore, it is not necessary to use circuits with linear characteristics within a large dynamic range.

According to a particular feature, at least one pilot sequence is mapped on subcarriers.

Thus, the receiver is able to estimate the link between the source and itself.

According to a particular feature, the amplitude of the subcarrier or subcarriers on which the at least one pilot sequence is mapped is modified.

Thus, the PAPR is still reduced even if pilot sequences are inserted.

According to a particular feature, a part of the second subcarriers is added before the first subcarriers and the remaining part of the second subcarriers is added after the first subcarriers.

Thus, the implementation of the present invention is simplified.

According to a particular feature, the second subcarriers are added before the first subcarriers or the second subcarriers are added after the first subcarriers.

According to a particular feature, the amplitude of at least a part of the subcarriers on which at least spread data are mapped is modified before the orthogonal frequency division multiplex modulation and according to a frequency response of a Square Root Raise Cosine Filter having a roll-off which is equal to the number of second subcarriers divided by the number of first subcarriers.

Thus, as modification of the amplitude is executed on digital side, the cost of that process is negligible as at most one multiplication per subcarrier is performed.

The spectrum of the transmitted signal is decreasing in a smooth manner. The PAPR is then reduced.

According to a particular feature, the single carrier orthogonal frequency division multiplex modulated symbol is sampled at a given frequency and the amplitude of at least a part of the subcarriers on which at least spread data are mapped is modified after the orthogonal frequency division multiplex modulation and according to a filter having a cutoff frequency which is equal to half the sampling frequency multiplied by the number of first subcarriers divided by the size of the transform executed during the OFDM modulation.

Thus, the spectrum of the transmitted signal is decreasing in a smooth manner. The PAPR is then reduced.

The present invention also concerns a method for processing a single carrier orthogonal frequency division multiplex modulated symbol received by a receiver, characterized in that the method comprises the steps executed by the receiver of:

- receiving symbols,
- transforming the received symbols from the time domain to the frequency domain, the received symbols being formed by at least data mapped on first and second subcarriers, the items mapped on second subcarriers being also mapped on first subcarriers, each second subcarrier being spaced from the first subcarrier on which the same data as the one mapped on the second subcarrier is mapped by the predetermined number of first subcarriers,
- estimating the link on subcarriers on the first and second subcarriers,
- performing an equalisation of the link using a first formula for subcarriers on which at least data is mapped on only once and using a second formula for subcarriers on which at least data is mapped on twice.

The present invention also concerns a device for processing a single carrier orthogonal frequency division multiplex modulated symbol received by a receiver, characterized in that the device is included in the receiver and comprises:

- means for receiving symbols,
- means for transforming the received symbols from the time domain to the frequency domain, the received symbols being formed by at least data mapped on first and second subcarriers, the items mapped on second subcarriers being also mapped on first subcarriers, each second subcarrier being spaced from the first subcarrier on which the same data as the one mapped on the second subcarrier is mapped by the predetermined number of first subcarriers,

- means for estimating the link on subcarriers on the first and second subcarriers,
- means for performing an equalisation of the link using a first formula for subcarriers on which at least data is mapped on only once and using a second formula for subcarriers on which at least data is mapped on twice.

Thus, the receiver takes profit of first and second subcarriers in order to perform the equalisation. The equalisation result is improved.

For example, the receiver performs an optimum demodulation according to MMSE (Minimum Mean Square Error) criterion, taking into account the particular structure of the transmitted signal.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :

Fig. 1 represents a wireless link in which the present invention is implemented;
Fig. 2 is a diagram representing the architecture of a source in which the present invention is implemented;
Fig. 3a discloses a block diagram of components of the wireless interface of the source according to a first mode of realization of the present invention;
Fig. 3b discloses a block diagram of components of the wireless interface of the source according to a second mode of realization of the present invention;
Fig. 4 discloses an example of a set of expanded subcarriers according to the present invention;
Fig. 5 discloses an example of a weighting on the set of expanded subcarriers according to the present invention;

Fig. 6 is a diagram representing the architecture of a receiver in which the present invention is implemented;

Fig. 7 discloses a block diagram of components of the wireless interface of the receiver;

Fig. 8a discloses an example of an algorithm executed by a source according to the first mode of realization of the present invention;

Fig. 8b discloses an example of an algorithm executed by a source according to the second mode of realization of the present invention;

Fig. 9 discloses an example of an algorithm executed by a receiver according to the present invention.

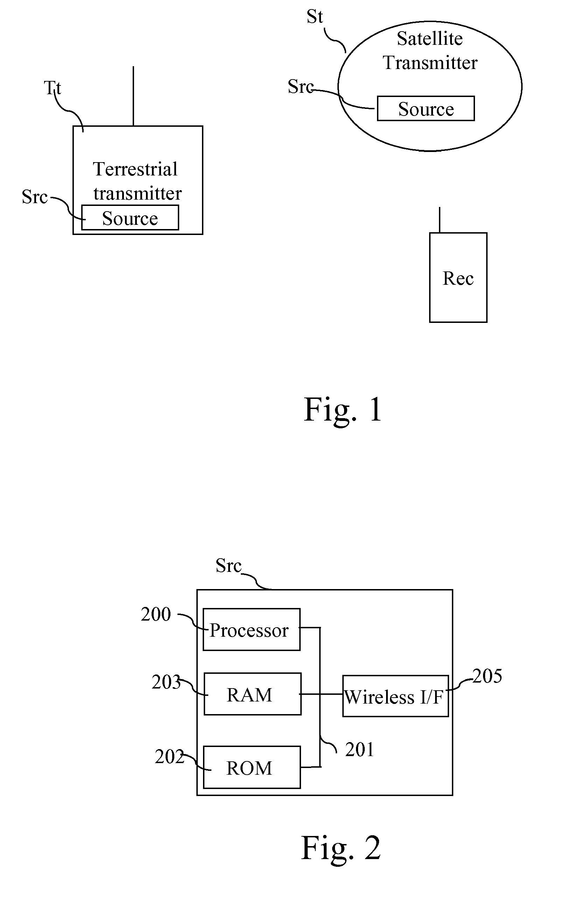

**Fig. 1** represents a wireless link in which the present invention is implemented.

The present invention will be disclosed in an example in which the signals transferred by a source Src are broadcast to receivers Rec. A source Src may be included in a satellite St or in a terrestrial transmitter Tt.

Only one satellite St and one terrestrial transmitter St are shown in the Fig. 1 for the sake of simplicity, but the wireless link may comprise a more important number of satellites St and/or of terrestrial transmitters St.

Only one receiver Rec is shown in the Fig. 1 for the sake of simplicity, but signals are broadcast to a more important number of receivers Rec.

The receiver Rec may be a mobile terminal to which data like video signals are broadcast.

According to the invention, the source Src:

- spreads data from the time domain to the frequency domain,
- maps at least a part of the spread data on a predetermined number of first subcarriers,
- maps a part of the spread data which are mapped on the predetermined number of first subcarriers on second subcarriers, the number of second subcarriers being lower than the number of first subcarriers, the subcarriers being consecutive, each second subcarrier being spaced from the first subcarrier on which the same data as the one mapped on the second subcarrier is mapped by the predetermined number of first subcarriers,
- reduces the amplitude of at least a part of the subcarriers on which at least the spread data are mapped,
- executes an orthogonal frequency division multiplex modulation on at least the mapped spread data on the first and second subcarriers in order to form a single carrier orthogonal frequency division multiplex modulated symbol,
- transfers the single carrier orthogonal frequency division multiplex modulated symbol.

According to the invention, the receiver Rec:

- receives symbols,
- transforms the received symbols from the time domain to the frequency domain, the received symbols being formed by at least data mapped on first and second subcarriers, the items mapped on second subcarriers being also mapped on first subcarriers, each second subcarrier being spaced from the first subcarrier on which the same data as the one mapped on the second subcarrier is mapped by the predetermined number of first subcarriers,
- estimates the link on subcarriers on the first and second subcarriers,
- performs an equalisation of the link using a first formula for subcarriers on which at least data is mapped on only once and using a second formula for subcarriers on which at least data is mapped on twice.

**Fig. 2** is a diagram representing the architecture of a source in which the present invention is implemented.

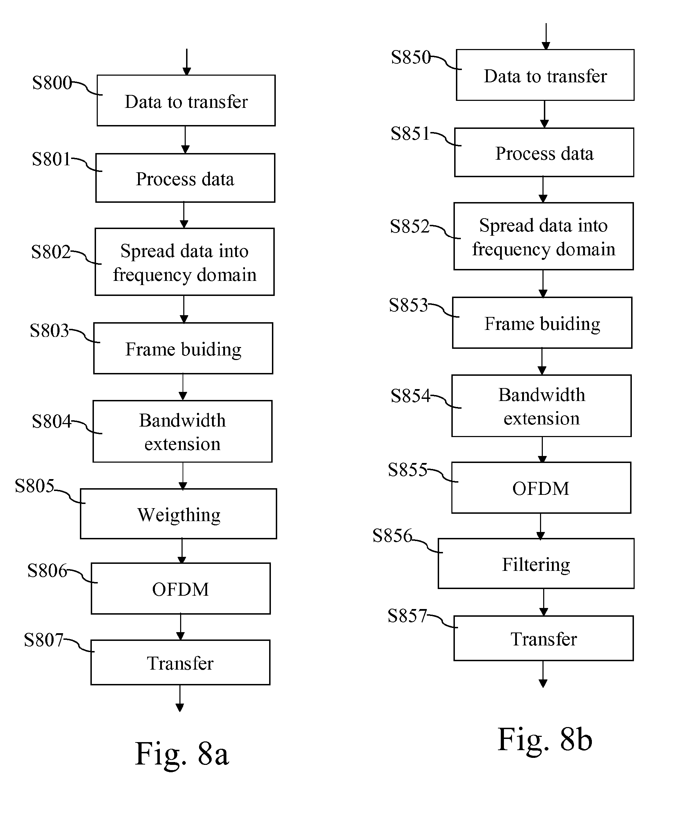

The source Src has, for example, an architecture based on components connected together by a bus 201 and a processor 200 controlled by the program as disclosed in Fig. 8a or 8b.

It has to be noted here that the source Src may have an architecture based on dedicated integrated circuits.

The bus 201 links the processor 200 to a read only memory ROM 202, a random access memory RAM 203 and a wireless interface 205.

The memory 203 contains registers intended to receive variables and the instructions of the program related to the algorithm as disclosed in Fig. 8a or 8b.

The processor 200 controls the operation of the wireless interface 205.

The read only memory 202 contains instructions of the program related to the algorithm as disclosed in Fig. 8a or 8b, which are transferred, when the source Src is powered on, to the random access memory 203.

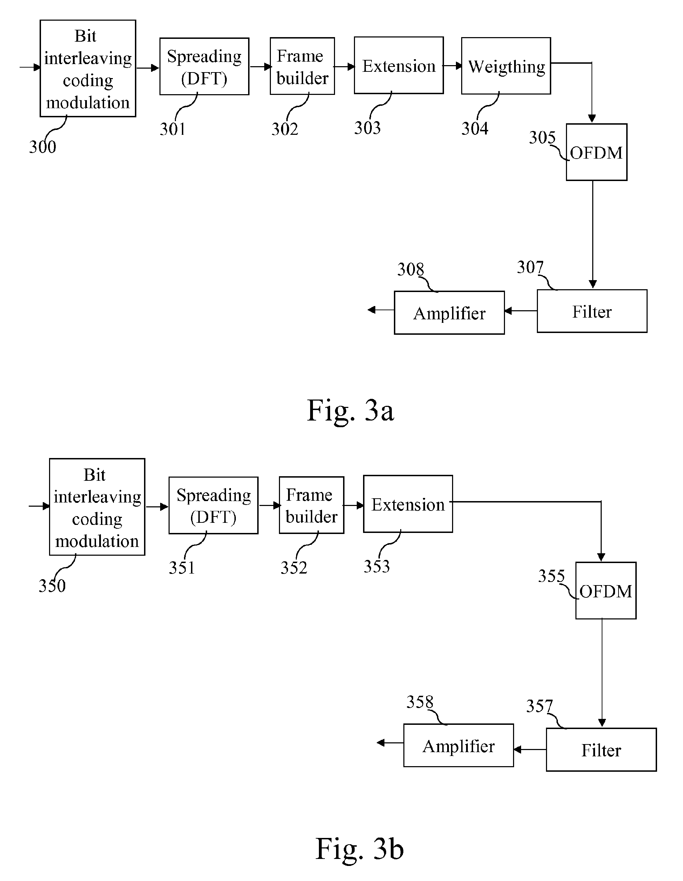

The wireless interface 205 comprises components as disclosed in Fig. 3a or 3b.

**Fig. 3a** discloses a block diagram of components of the wireless interface of the source according to a first mode of realization of the present invention.

Data to be transmitted are interleaved, coded and organized as data elementary symbols by the coding and modulation module 300 giving a set of data elementary symbols.

Then, the data elementary symbols are spread in the frequency domain by the DFT (Discrete Fourier Transform) module 301 in order to form a spread data block composed of spread data symbols mapped on subcarriers. In a variant, the DFT module is replaced by a Fast Fourier Transform module or any other processing module.

The frame builder 302 may insert null coefficients and/or at least one pilot sequence or may replace part of the spread data block by at least one pilot sequence and/or by null coefficients k.

If there is no pilot sequence, the data are mapped on M subcarriers named original subcarriers.

If there is at least one pilot sequence, the data and the at least one pilot sequence are mapped on the M original subcarriers.

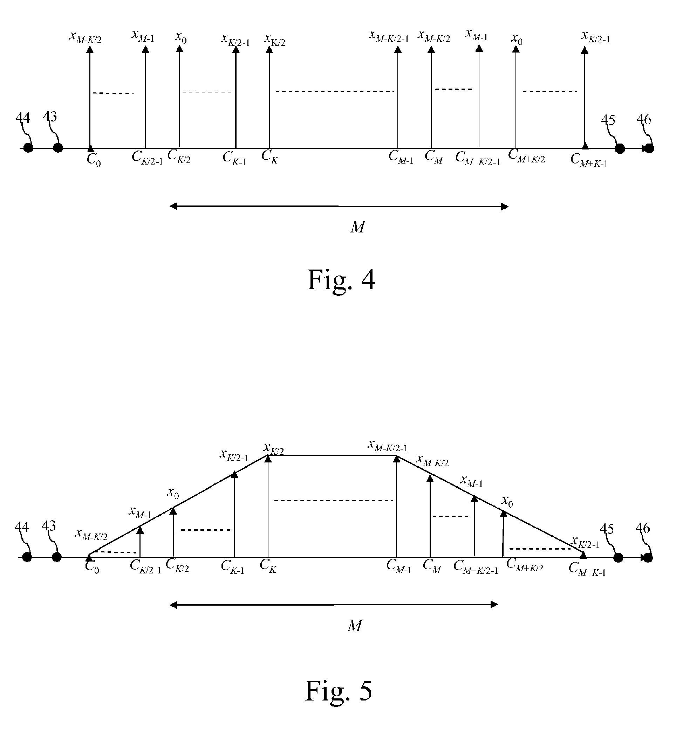

The number of M original subcarriers is increased by a bandwidth extension module 303 which, instead of modulating M original subcarriers, modulates $M+K$ subcarriers. The content, i.e. the items which are mapped on the M original subcarriers, is not modified. The items mapped on the additional K subcarriers are obtained by copying the items mapped on subcarriers placed at a distance of M. This operation will be disclosed with more details in reference to the Fig. 4.

An item may be data and/or pilot element of a pilot sequence.

The $M+K$ subcarriers are weighted by a weighting module 304. This operation will be disclosed with more details in reference to the Fig. 5.

The $M+K$ subcarriers are processed by the OFDM modulation module 305 in order to form a SC-OFDM symbol prior to be transferred through one or plural antennas.

The OFDM modulation module 305 is for example an inverse FFT module.

An optional cyclic prefix insertion module, not shown in Fig. 3, can be applied before transmission or during OFDM modulation. The SC-OFDM symbol is sampled at a frequency of 1/T.

The output of the OFDM module 305 is connected to an analog front end which comprises at least a filter 307 and an amplifier 308 the dynamic range of which is reduced thanks to the present invention.

For example, the filter 307 is a half Nyquist filter. The filter 307 has, for example, a cutoff frequency of 1/2T.

**Fig. 3b** discloses a block diagram of components of the wireless interface of the source according to a second mode of realization of the present invention.

Data to be transmitted are interleaved, coded and organized as data elementary symbols by the coding and modulation module 350 giving a set of data elementary symbols.

Then, the data elementary symbols are spread in the frequency domain by the DFT (Discrete Fourier Transform) module 351 in order to form a spread data block composed of spread data symbols mapped on subcarriers. In a variant, the DFT module is replaced by a Fast Fourier Transform module or any other processing module.

The frame builder 352 may insert null coefficients and/or at least one pilot sequence or may replace part of the spread data block by at least one pilot sequence and/or by null coefficients.

If there is no pilot sequence, the data are mapped on M subcarriers named original subcarriers.

If there is at least one pilot sequence, the data and the at least one pilot sequence are mapped on the M original subcarriers.

The number of M original subcarriers is increased by a bandwidth extension module 353 which, instead of modulating M original subcarriers, modulates $M+K$ subcarriers. The content, i.e. the items which are mapped on the M original subcarriers of the original M subcarriers is not modified. The items mapped on the additional K subcarriers are obtained by copying the items mapped on subcarriers placed at a distance of $M$. This operation will be disclosed with more details in reference to the Fig. 4.

The $M+K$ subcarriers are processed by the OFDM modulation module 355 in order to form a SC-OFDM symbol prior to be transferred through one or plural antennas.

The OFDM modulation module 355 is for example an inverse FFT module.

An optional cyclic prefix insertion module, not shown in Fig. 3, can be applied before transmission or during OFDM modulation. The SC-OFDM symbol is sampled at a frequency of 1/T.

The output of the OFDM module is connected to a transmission front end which comprises at least a filter 357 and an amplifier 358 the dynamic range of which is reduced thanks to the present invention.

For example, the filter 307 is a half Nyquist filter. The filter 307 has, for example, a cutoff frequency of half the sampling frequency of the SC-OFDM symbol multiplied by M and divided by the size of the transform executed during the OFDM modulation 355.

**Fig. 4** discloses an example of a set of expanded subcarriers according to the present invention.

In the example of Fig. 4, $\alpha=K/2$, subcarriers noted $C_0$ to $C_{K/2-1}$ with $1<K<M$ sare added on the left side of the M original subcarriers and K- $\alpha$ subcarriers noted $C_{M+K2}$ to $C_{M+K-1}$ are added on the right side of the M original subcarriers.,

The M original subcarriers are noted $C_{K/2}$ to $C_{M+K/2-1}$. The items mapped on the M original subcarriers are noted $x_0$ to $x_{M-1}$.

More precisely, the items noted $x_0$ to $x_{K/2-1}$ mapped on the $K/2$ first subcarriers $C_{K/2}$ to $C_K$ of the M original subcarriers are also mapped after the M original subcarriers, i.e. after the subcarrier $C_{M+K/2-1}$ on the subcarriers $C_{M+K/2}$ to $C_{M+K-1}$.

The items noted $x_{M-K/2}$ to $x_{M-1}$ mapped on the last $K/2$ subcarriers $C_M$ to $C_{M+K/2-1}$ of the M original subcarriers are copied before the M original subcarriers, i.e. before the subcarrier $C_{K/2}$ on the subcarriers $C_0$ to $C_{K/2-1}$ The subcarriers $C_0$ to $C_{M+K-1}$ are consecutive.

In a variant of realization, K subcarriers of the M original subcarriers are copied after the M original subcarriers and none before of the M original subcarriers, or inversely K subcarriers of the M original subcarriers are copied before the M original subcarriers and none after the M original subcarriers.

The inventor has found that the important point for the good properties of the set of expanded subcarriers is to respect a *M*-periodicity.

For example, if *K* subcarriers of the M original subcarriers are copied after the *M* original subcarriers and none before of the M original subcarriers, $C_k$ is the subcarrier, with k varying from 0 to *M+K-1*, then, the item mapped on subcarrier $C_{k+M}$ is the same as the item mapped on subcarrier $C_k$ *for k* varying from 0 to *K-1*. The same formula is also applicable if *K* subcarriers of the M original subcarriers are copied before the *M* original subcarriers and none after of the M original subcarriers or if part of K subcarriers of the M original subcarriers are copied before the M original subcarriers and the other part of the K subcarriers of the M original subcarriers are copied after of the M original subcarriers.

As shown in Fig. 4, there may be at the borders of the set of expanded subcarriers some extra subcarriers on which null items are mapped as shown by the references 43, 44, 45 and 46.

It has to be noted here that $\alpha$ may be equal to other value than *K/2.*

**Fig. 5** discloses an example of a weighting on the set of expanded subcarriers according to the present invention.

The weighting operation is represented in Fig. 5. The amplitudes of items of the subcarriers $C_0$ to $C_{K/2-1}$, $C_{K/2}$ to $C_{K-1}$, $C_K$ to $C_{M-1}$, $C_M$ to $C_{M+K/2-1}$ and $C_{M+K/2}$ to $C_{M+K-1}$ are processed by the weighting module 304 according to the first mode of realization.

The weighting has to be selected to insure good spectrum performance and low PAPR. For example, the inventor has found that a good candidate is a frequency response of a Square Root Raise Cosine Filter having a roll-off which is equal to *K/M.*

The roll-off is for example upper than five percent and lower than thirty five percent.

A frequency response of a Raise cosine filter may also be used instead of the Square Root Raise Cosine Filter one.

For example, the amplitude of the item $x_0$ mapped on the sub-carriers $C_{K/2}$ and $C_{M+K2}$ is reduced by around three decibels.

The amplitudes of the items $x_{K/2}$ to $x_{M-K/2-1}$ mapped on the subcarriers $C_K$ to $C_{M-1}$ are not reduced.

The amplitudes of the items mapped on other subcarriers are reduced smoothly as shown in the example of Fig. 5.

Amplitudes of the weighted subcarriers correspond to the spectrum of the signal that is transmitted. A spectrum with smooth signal transitions insures better PAPR characteristic than a spectrum with sharp transitions.

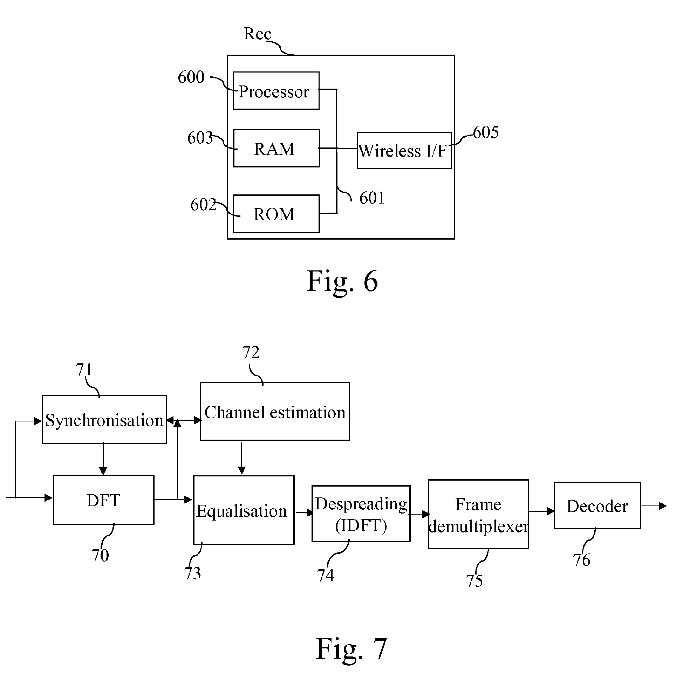

Fig. 6 is a diagram representing the architecture of a receiver in which the present invention is implemented.

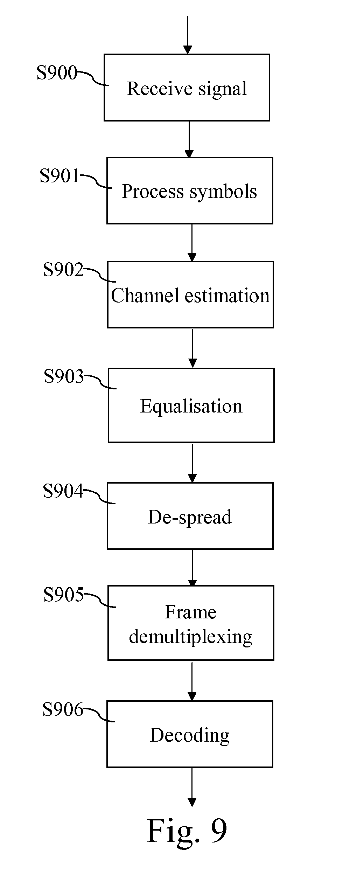

The receiver Rec has, for example, an architecture based on components connected together by a bus 601 and a processor 600 controlled by the program as disclosed in Fig. 9.

It has to be noted here that the receiver Rec may have an architecture based on dedicated integrated circuits.

The bus 601 links the processor 600 to a read only memory ROM 602, a random access memory RAM 603 and a wireless interface 605.

The memory 603 contains registers intended to receive variables and the instructions of the program related to the algorithm as disclosed in Fig. 9.

The processor 600 controls the operation of the wireless interface 605.

The read only memory 602 contains instructions of the program related to the algorithm as disclosed in Fig. 9, which are transferred, when the receiver Rec is powered on, to the random access memory 603.

The wireless interface 605 comprises components as disclosed in Fig. 7.

**Fig. 7** discloses a block diagram of components of the wireless interface of the receiver.

The wireless interface 605 comprises a synchronisation module 71 which is in charge of synchronising a DFT module 70 and a channel estimation module 72 on the received symbols.

The DFT module 70 transforms the received symbols from the time domain to the frequency domain into received spread data $y_k$ where *k* denotes the index of subcarrier.

The transformed received symbols are provided to the channel estimation module 702 and to an equalisation module 73.

The channel estimation module 72 estimates the channel between the source Src and the receiver Rec at pilot sequence positions, performs an interpolation for the subcarriers on which data are mapped in order to estimate the channel between the source Src and the receiver Rec on subcarriers on which data are mapped.

For the channel estimation module 72, the channel has now to be estimated on *M+K* carriers, and not only M carriers.

If a pilot pattern is used, it must be also extended in the frequency domain. For example, in 3GPP/LTE, (Third Generation Partnership Project /Long Term Evolution) a specific OFDM symbol is dedicated for channel estimation, and the M subcarriers convey pilot elements of pilot sequences. Here, the *M+K* subcarriers will convey pilot elements of pilot sequences. The channel estimation process will be realised on *M+K* subcarriers instead on M carriers.

The output of the channel estimation module 72 is provided to the equalisation module 73.

The equalisation module 73 determines equalisation coefficients taking into account information provided by the channel estimation module 72.

For example, the equalisation is a MMSE equalisation.

We now have *M+K* received data $y_k$, for M data

to be estimated.

Without any loss in generality, we assume that the M items $x_k$ to be estimated are mapped on the subcarrier $C_k$ for $0 \leq k < M$ , and that the redundant information is mapped on the subcarrier $C_k$ for $M \leq k < M + K$.

For the items that have not been copied, i.e. for $k \geq K$ , the equalisation formula is as follows:

$$\hat{x}_k = \frac{\hat{h}_k^*}{\left|\hat{h}_k\right|^2 + \hat{\sigma}^2} y_k$$

where * denotes the conjugate, $x_k$ is the complex item mapped on subcarrier $C_k$, $y_k$ is the received signal in the frequency domain, i.e. before dispreading, $h_k$ is the frequency channel response for the subcarrier $C_k$, ^ denotes an estimate, then:

$$y_k = h_k \, x_k + b_k$$

Where $b_k$ is an additive noise of variance $\sigma^2$.

For the items that have been copied, i.e. for $0 \leq k < K$ , the MMSE equalisation corresponds to the formula:

$$\hat{x}_k = \frac{\hat{h}_k^* y_k + \hat{h}_{k+M}^* y_{k+M}}{\left|\hat{h}_k\right|^2 + \left|\hat{h}_{k+M}\right|^2 + \hat{\sigma}^2}$$

It has to be noted here that the pilots sequences used for channel estimation are windowed as the data, which is the preferable mode of operation.

If it is not the case, the estimated channel response $h_k$ has to be weighted as done by the weighting module 34 or by the filter 357.

The equalised symbols are de-spread by a de-spreading module 74.

The output of the de-spreading module 74 is connected to a frame demultiplexer 75 which de-multiplexes the equalized and de-spread symbols.

The output of the frame demultiplexer 75 is connected to a decoder 76 which at least de-interleaves and decodes data.

It has to be noted here that in a suboptimal operation, it is possible for the receiver Rec to ignore the additional K subcarriers.

**Fig. 8a** discloses an example of an algorithm executed by a source according to the first mode of realization of the present invention.

The present algorithm is executed by the processor 200 of the source Src.

At step S800, the processor 200 is informed that data have to be transferred by the source Src.

At next step S801, the processor 200 commands the process of data to be transferred.

Data to be transferred are interleaved, coded and organized as data elementary symbols.

A next step S802, the processor 200 commands the spreading of the data elementary symbols in the frequency domain by the DFT in order to form a spread data block composed of spread data symbols on M subcarriers named original subcarriers. In a variant, the DFT module is replaced by a Fast Fourier Transform module or any other processing module.

A next step S803, the processor 200 commands the building of a frame.

During the building of the frame, null coefficients and/or at least one pilot sequence may be inserted or may replace part of the spread data block.

At next step S804, the processor 200 commands the bandwidth extension.

The bandwidth extension is performed as disclosed in reference to the Fig. 4.

At next step S805, the processor 200 commands the weighting of the M+K subcarriers as disclosed in reference to the Fig. 5.

At next step S805, the processor 200 commands the OFDM modulation of the M+K subcarriers prior to be transferred at step S807 through one or plural antennas in order to form a SC-OFDM symbol.

An optional cyclic prefix insertion step, not shown in Fig. 8, can be applied before transmission through the antenna of the source Src, for example during the OFDM modulation.

A filtering step not shown in Fig. 8 may be performed after the OFDM modulation. For example, the filter is a half Nyquist filter.

**Fig. 8b** discloses an example of an algorithm executed by a source according to the second mode of realization of the present invention.

The present algorithm is executed by the processor 200 of the source Src.

At step S850, the processor 200 is informed that data have to be transferred by the source Src.

At next step S851, the processor 200 commands the process of data to be transferred.

Data to be transferred are interleaved, coded and organized as data elementary symbols.

A next step S852, the processor 200 commands the spreading of the data elementary symbols in the frequency domain by the DFT in order to form a spread data block composed of spread data symbols on M subcarriers named original subcarriers. In a variant, the DFT module is replaced by a Fast Fourier Transform module or any other processing module.

A next step S853, the processor 200 commands the building of a frame.

During the building of the frame, null coefficients and/or at least one pilot sequence may be inserted or may replace part of the spread data block.

At next step S854, the processor 200 commands the bandwidth extension.

The bandwidth extension is performed as disclosed in reference to the Fig. 4.

At next step S855, the processor 200 commands the OFDM modulation of the $M+K$ subcarriers in order to form a single carrier orthogonal frequency division multiplex modulated symbol. The single carrier orthogonal frequency division multiplex modulated symbol is sampled at a frequency equal to 1/T.

An optional cyclic prefix insertion step, not shown in Fig. 8, can be applied before transmission through the antenna of the source Src, for example during the OFDM modulation.

At next step S856, the processor 200 commands the filtering of the single carrier orthogonal frequency division multiplex modulated symbol.

For example, the filter is a half Nyquist filter. The filter has, for example, a cutoff frequency of half the sampling frequency of the single carrier orthogonal frequency division multiplex modulated symbol multiplied by M and divided by the size of the transform executed during the OFDM modulation step.

Fig. 9 discloses an example of an algorithm executed by a receiver according to the present invention.

The present algorithm is executed by the processor 600 of the receiver Rec.

At step S900, the processor 600 is informed of the reception of a frame composed of signals representative of received symbols.

At next step S901, the processor 600 commands the process of the received symbols. The received symbols are transformed from the time domain to the frequency domain using a DFT and are provided to the channel estimation module.

At next step S902, the processor 600 commands the estimate of the channel between the source Src and the receiver Rec as disclosed in reference to the Fig. 7.

At next step S903, the processor 600 commands the equalisation of the symbols as disclosed in reference to the Fig. 7.

At next step S904, the processor 600 commands the de-spreading of equalised symbols.

At next step S905, the processor 600 commands the frame demultiplexer 75 which de-multiplexes the equalized and de-spread symbols.

At next step S906, the processor 600 commands the decoder in order to at least de-interleave and decode the de-multiplexed equalized and de-spread symbols.

Naturally, many modifications can be made to the embodiments of the invention described above without departing from the scope of the present invention.

## Claims

1. Method for improving the peak to average power ratio structure of single carrier orthogonal frequency division multiplex modulation scheme, **characterised in that** the method comprises the steps, executed by a source transferring signal, of :

   - spreading data from the time domain to the frequency domain,
   - mapping at least a part of the spread data on a predetermined number of first subcarriers and mapping a part of the spread data which are mapped on the predetermined number of first subcarriers on second subcarriers, the number of second subcarriers being lower than the number of first subcarriers, the subcarriers being consecutive, each second subcarrier being spaced from the first subcarrier on which the same data as the one mapped on the second subcarrier is mapped by the predetermined number of first subcarriers,
   - reducing the amplitude of at least a part of the subcarriers on which at least the spread data are mapped,
   - executing an orthogonal frequency division multiplex modulation on at least the mapped spread data on the first and second subcarriers in order to form a single carrier orthogonal frequency division multiplex modulated symbol,
   - transferring the single carrier orthogonal frequency division multiplex modulated symbol.

2. Method according to claim 1, **characterized in that** at least one pilot sequence is mapped on at least one subcarrier.

3. Method according to claim 2, **characterized in that** the amplitude of the subcarrier or subcarriers on which the at least one pilot sequence is mapped is modified.

4. Method according to any of the claims 1 to 3, **characterized in that** a part of the second subcarriers is added before the first subcarriers and the remaining part of the second subcarriers is added after the first subcarriers.

5. Method according to any of the claims 1 to 3, **characterized in that** the second subcarriers are added before the first subcarriers or the second subcarriers are added after the first subcarriers.

6. Method according to any of the claims 1 to 5, **characterized in that** the amplitude of at least a part of the subcarriers on which at least spread data are mapped is modified before the orthogonal frequency division multiplex modulation and according to a frequency response of a Square Root Raise Cosine Filter having a roll-off which is equal to the number of second subcarriers divided by the number of first subcarriers.

7. Method according to any of the claims 1 to 5, **characterized in that** the single carrier orthogonal frequency division multiplex modulated symbol is sampled at a given frequency and **in that** the amplitude of at least a part of the subcarriers on which at least spread data are mapped is modified after the orthogonal frequency division multiplex modulation and according to a filter having a cutoff frequency which is equal to half the sampling frequency multiplied by the number of first subcarriers divided by the size of the transform executed during the OFDM modulation.

8. Method for processing a single carrier orthogonal frequency division multiplex modulated symbol received by a receiver, **characterized in that** the method comprises the steps executed by the receiver of:

   - receiving symbols,
   - transforming the received symbols from the time domain to the frequency domain, the received symbols being formed by at least data mapped on first and second subcarriers, the items mapped on second subcarriers being also mapped on first subcarriers, each second subcarrier being spaced from the first subcarrier on which the same data as the one mapped on the second subcarrier is mapped by the predetermined number of first subcarriers,
   - estimating the link on subcarriers on the first and second subcarriers,
   - performing an equalisation of the link using a first formula for subcarriers on which at least data is mapped on only once and using a second formula for subcarriers on which at least data is mapped on twice.

9. Device for improving the peak to average power ratio structure of single carrier orthogonal frequency division multiplex modulation scheme, **characterised in that** the device is included in a source transferring signal and comprises :

   - means for spreading data from the time domain to the frequency domain,
   - means for mapping at least a part of the spread data on a predetermined number of first subcarriers and for mapping a part of the spread data which are mapped on the predetermined number of first subcarriers on second subcarriers, the number of second subcarriers being lower than the number of first subcarriers, the subcarriers being consecutive, each second subcarrier being spaced from the first subcarrier on which the same data as the one mapped on the second subcarrier is mapped by the predetermined number of first subcarriers,
   - means for reducing the amplitude of at least a part of the subcarriers on which at least the spread data are mapped,
   - means for executing an orthogonal frequency division multiplex modulation on at least the mapped spread data on the first and second subcarriers in order to form a single carrier orthogonal frequency division multiplex modulated symbol,
   - transferring the single carrier orthogonal frequency division multiplex modulated symbol.

10. Device for processing a single carrier orthogonal frequency division multiplex modulated symbol received by a receiver, **characterized in that** the device is included in the receiver and comprises:

   - means for receiving symbols,
   - means for transforming the received symbols from the time domain to the frequency domain, the received symbols being formed by at least data mapped on first and second subcarriers, the items mapped on second subcarriers being also mapped on first subcarriers, each second subcarrier being spaced from the first subcarrier on which the same data as the one mapped on the second subcarrier is mapped by the predetermined number of first subcarriers,
   - means for estimating the link on subcarriers on the first and second subcarriers,
   - means for performing an equalisation of the link using a first formula for subcarriers on which at least data is mapped on only once and using a second formula for subcarriers on which at least data is mapped on twice.

11. Computer program which can be directly loadable into a programmable device, comprising instructions or portions of code for implementing the steps of the method according to claims 1 to 7, when said computer program is executed on a programmable device.

12. Computer program which can be directly loadable into a programmable device, comprising instructions or portions of code for implementing the steps of the method according to claim 8, when said computer program is executed on a programmable device.

Tt

Src

Terrestrial
transmitter

Source

St

Satellite
Transmitter

Src

Source

Rec

# Fig. 1

Src

200 — Processor

203 — RAM

202 — ROM

201

205 — Wireless I/F

# Fig. 2

## Fig. 3a

## Fig. 3b

EP 2 424 182 A1

Fig. 4

Fig. 5

12

Rec

Processor

600

603 RAM Wireless I/F 605

601

602 ROM

# Fig. 6

71 Synchronisation

72 Channel estimation

70 DFT

73 Equalisation

74 Despreading (IDFT)

75 Frame demultiplexer

76 Decoder

# Fig. 7

S800 — Data to transfer

S801 — Process data

S802 — Spread data into frequency domain

S803 — Frame buiding

S804 — Bandwidth extension

S805 — Weigthing

S806 — OFDM

S807 — Transfer

**Fig. 8a**

S850 — Data to transfer

S851 — Process data

S852 — Spread data into frequency domain

S853 — Frame buiding

S854 — Bandwidth extension

S855 — OFDM

S856 — Filtering

S857 — Transfer

**Fig. 8b**

S900 — Receive signal

S901 — Process symbols

S902 — Channel estimation

S903 — Equalisation

S904 — De-spread

S905 — Frame demultiplexing

S906 — Decoding

Fig. 9

Europäisches
Patentamt

European
Patent Office

Office européen
des brevets

# EUROPEAN SEARCH REPORT

Application Number

EP 10 17 4546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAMSUNG: "Spectrum shaping filtering in DFT-spread OFDM", 3GPP DRAFT; R1-051038 SPECTRUM SHAPING FILTERING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Diego, USA; 20051004, 4 October 2005 (2005-10-04), XP050100660, [retrieved on 2005-10-04] * paragraph [0001] - paragraph [0002] * | 1-12 | INV. H04L27/26 |
| X | NTT DOCOMO ET AL: "DFT-Spread OFDM with Pulse Shaping Filter in Frequency Domain in Evolved UTRA Uplink", 3GPP DRAFT; R1-050702 DFT-SPREAD OFDM WITH PSF IN UPLINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. London, UK; 20050825, 25 August 2005 (2005-08-25), XP050100352, [retrieved on 2005-08-25] * paragraph [0002] * | 1-12 | |
| | | | TECHNICAL FIELDS SEARCHED (IPC) |
| | | | H04L |
| X | WO 2007/091235 A2 (ALTAIR SEMICONDUCTOR LTD [IL]; BITRAN YIGAL [IL]; YAGIL ARIEL [IL]) 16 August 2007 (2007-08-16) * figure 2 * * figure 3 * * figure 4 * * page 9, line 24 - page 12, line 27 * | 1-12 | |

-/--

The present search report has been drawn up for all claims

| Place of search | Date of completion of the search | Examiner |
|---|---|---|
| Berlin | 8 February 2011 | Douglas, Ian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 10 17 4546

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/165829 A1 (NARASIMHA MADIHALLY J [US] ET AL) 1 July 2010 (2010-07-01)<br>* figure 11 *<br>* figure 12 *<br>* paragraph [0086] - paragraph [0088] *<br>----- | 1-12 | |
| X | EP 1 868 336 A2 (FUJITSU LTD [JP]) 19 December 2007 (2007-12-19)<br>* figure 2a *<br>* figure 3 *<br>* figure 4 *<br>* figure 10 *<br>* figure 11 *<br>* paragraph [0013] - paragraph [0015] *<br>----- | 1-12 | |
| X | EP 1 936 900 A1 (NOKIA SIEMENS NETWORKS GMBH [DE]; FRAUNHOFER GES FORSCHUNG [DE]) 25 June 2008 (2008-06-25)<br>* figure 1 *<br>* figure 2 *<br>* figure 3 *<br>* figure 4 *<br>* paragraph [0025] - paragraph [0049] *<br>----- | 1-12 | TECHNICAL FIELDS SEARCHED (IPC) |
| X | VOLKER JUNGNICKEL ET AL: "SC-FDMA Waveform Design, Performance, Power Dynamics and Evolution to MIMO", 1 May 2007 (2007-05-01), PORTABLE INFORMATION DEVICES, 2007. PORTABLE07. IEEE INTERNATIONAL CON FERENCE ON, IEEE, PI, PAGE(S) 1 - 6, XP031094640, ISBN: 978-1-4244-1039-2<br>* paragraph [0II.] *<br>----- | 1-12 | |

The present search report has been drawn up for all claims

| Place of search | Date of completion of the search | Examiner |
|---|---|---|
| Berlin | 8 February 2011 | Douglas, Ian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 17 4546

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2011

| Patent document cited in search report | | Publication date | Patent family member(s) | | Publication date |
|---|---|---|---|---|---|
| WO 2007091235 | A2 | 16-08-2007 | CN | 101502069 A | 05-08-2009 |
| | | | JP | 2009526463 T | 16-07-2009 |
| | | | US | 2008298316 A1 | 04-12-2008 |
| US 2010165829 | A1 | 01-07-2010 | WO | 2010078061 A2 | 08-07-2010 |
| EP 1868336 | A2 | 19-12-2007 | CN | 101087290 A | 12-12-2007 |
| | | | JP | 2007329588 A | 20-12-2007 |
| | | | KR | 20070116709 A | 11-12-2007 |
| | | | US | 2007280365 A1 | 06-12-2007 |
| EP 1936900 | A1 | 25-06-2008 | CN | 101682592 A | 24-03-2010 |
| | | | EP | 2103070 A1 | 23-09-2009 |
| | | | WO | 2008074518 A1 | 26-06-2008 |
| | | | US | 2010098182 A1 | 22-04-2010 |

EPO FORM P0459

For more details about this annex : see Official Journal of the European Patent Office, No. 12/82